# EUROPEAN PATENT APPLICATION

(11) **EP 4 403 838 A1**
(43) Date of publication of application: **24.07.2024**
(21) Application number: 22885088.9
(22) Date of filing: 30.05.2022
(51) Int. Cl.: F24F 6/12, F21S 10/04

(54) **SIMULATED FLAME HUMIDIFIER**

(30) Priority: 27.10.2021 CN 202122600711 U
(71) Applicant: Airmate Electrical (Jiu Jiang) Co., Ltd, Jiujiang, Jiangxi 332000 (CN)
(72) Inventor: CAI, Zhengfu, Jiujiang, Jiangxi 332000 (CN)
(74) Representative: KIPA AB
(86) International application number: PCT/CN2022/096000
(87) International publication number: WO 2023/071178

(57) **Abstract**

A simulated flame humidifier, comprising a humidifying assembly (1) for generating mist and a mist guiding assembly for guiding the mist. One end of the mist guiding assembly is connected to the humidifying assembly (1); the mist guiding assembly comprises a mist guiding tube (2), a mist outlet grid (3), and a lighting assembly (4); the lighting assembly (4) and the mist outlet grid (3) are both disposed in the mist guiding tube (2); the lighting assembly (4) is disposed above the mist outlet grid (3); the mist outlet grid (3) comprises a fixing plate (31) and a plurality of mist-guiding inclined surfaces (32), the mist-guiding inclined surfaces (32) being successively arranged along the length direction of the fixing plate (31). The humidifier can form a realistic flame effect.

## Description

### TECHNICAL FIELD

The present application relates to the field of household appliances, and more specifically, to a simulated flame humidifier.

### BACKGROUND

During winter, using electric heaters indoors can lead to dryness, causing discomfort for many sufferers of rhinitis and even nosebleeds for regular users due to excessively dry air. Traditional humidifiers often have limited functionality and a monotonous design, lacking decorative appeal. Especially in today's trend towards fashion, both in homes and offices, people prioritize the decorative effect of functional home appliances. Hence, there's a demand for a type of humidifier with simulated flames. However, these humidifiers often suffer from uneven mist distribution, resulting in uneven simulated flames where some areas lack proper display, thus compromising the overall visual effect.

### SUMMARY

The present application provides a simulated flame humidifier in order to solve the defects and deficiencies handled by the existing technology.

In order to realize the above purpose, the technical solution adopted in the present application is to provide a simulated flame humidifier, comprises a humidifying assembly for generating mist and a mist guiding assembly for guiding the mist, one end of the mist guiding assembly is connected to the humidifying assembly, wherein the mist guiding assembly comprises a mist guiding tube, a mist outlet grid, and a lighting assembly; the lighting assembly and the mist outlet grid are both disposed in the mist guiding tube; the lighting assembly is disposed above the mist outlet grid; the mist outlet grid comprises a fixing plate and a plurality of mist-guiding inclined surfaces, the mist-guiding inclined surfaces being successively arranged along the length direction of the fixing plate.

The mist guiding tube comprises an upper cover and a lower cover, the upper cover is arranged on the lower cover to form a mist-guiding channel, and the upper cover is provided with a mist outlet, the mist outlet is arranged opposite to the lighting assembly.

The upper cover is provided with a mist-guiding curved surface, the mist outlet grid is provided below the mist-guiding curved surface; the mist-guiding curved surface comprises a convex surface being convex towards an outer side of the mist guiding tube and a concave surface being concave towards an inner side of the mist guiding tube.

A limited slot is provided on the upper cover, and a convex edge matching the limited slot is provided on the lower cover, the convex edge is engaged with the limited slot.

One end of the mist guiding tube connected to the humidifying assembly is provided with a silicone sealing ring for preventing water leakage.

The upper cover and the lower cover are integrally welded by ultrasonic welding.

The lighting assembly is an LED light board.

### The beneficial effects of this application are as follows:

The present application provides a simulated flame humidifier. The humidifying assembly generates water mist through an ultrasonic oscillation plate, which is then blown into the mist guiding assembly by a fan. The water mist is blown upward through the mist outlet of the mist guiding tube via the mist outlet grid. The water mist is evenly distributed through the mist-guiding inclined surface of the mist outlet grid and the mist-guiding curved surface of the upper cover. When the LED light board is activated, the light illuminates the water mist, creating a realistic flame effect with mist and light.

### DESCRIPTION OF THE DRAWINGS

Figure 1 illustrates a schematic diagram of a simulated flame humidifier according to the present application.
Figure 2 illustrates an exploded view of the mist guiding assembly of a simulated flame humidifier according to the present application.
Figure 3 illustrates a sectional view of the mist guiding assembly of a simulated flame humidifier according to the present application.

### DETAILED DESCRIPTION OF THE PREFERRED EMBODIMENT

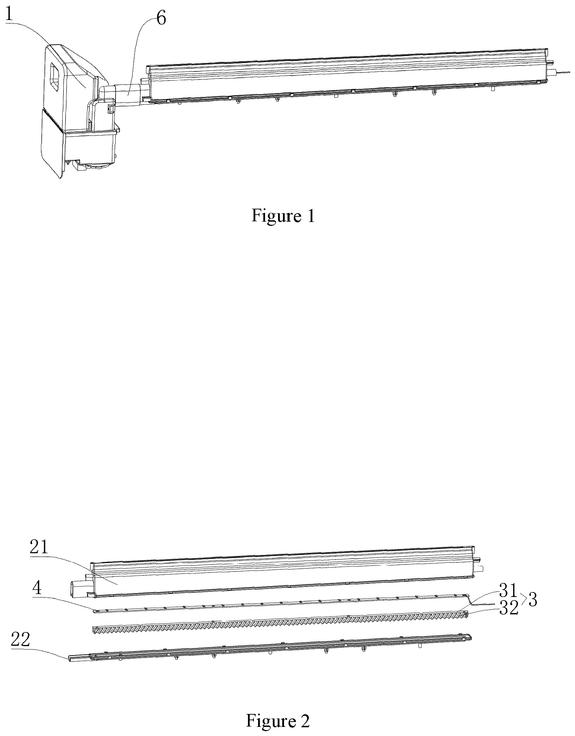

Further detailed description of the present application is provided below in conjunction with the accompanying drawings. These drawings are simplified schematic diagrams, intended only to illustrate the basic structure of the present application. The specific implementation is based on the orientation in Figure 1.

As shown in Figures 1, 2, and 3, a simulated flame humidifier comprises a humidifying assembly 1 for generating mist and a mist guiding assembly for guiding the mist. One end of the mist guiding assembly is connected to the humidifying assembly 1. The mist guiding assembly includes a mist guiding tube 2, a mist outlet grid 3, and a lighting assembly 4. The lighting assembly 4 and the mist outlet grid 3 are both arranged inside the mist guiding tube 2, with the lighting assembly 4 positioned above the mist outlet grid 3. The mist outlet grid 3 includes a fixing plate 31 and several mist-guiding inclined surfaces 32 arranged along the length direction of the fixing plate 31. The mist guiding tube 2, the mist outlet grid 3, and the lighting assembly 4 are all strip-shaped. The water mist generated by the humidifying assembly 1 flows out through the mist guiding tube 2 and is irradiated by the lighting assembly 4 to simulate a row of burning flames in the length direction of the mist guiding tube 2.

The mist guiding tube 2 includes an upper cover 21 and a lower cover 22. The upper cover 21 is mounted on the lower cover 22 to form a mist-guiding channel, and a mist outlet 23 is provided on the upper cover 21, opposite to the lighting assembly 4.

A mist-guiding curved surface 5 is provided on the upper cover 21, and the mist outlet grid 3 is arranged below the mist-guiding curved surface 5. The mist-guiding curved surface 5 includes a convex surface 51 and a concave surface 52, with the concave surface 52 recessed towards the inner side of the mist guiding tube 2 and the convex surface 51 protruding towards the outer side of the mist guiding tube 2.

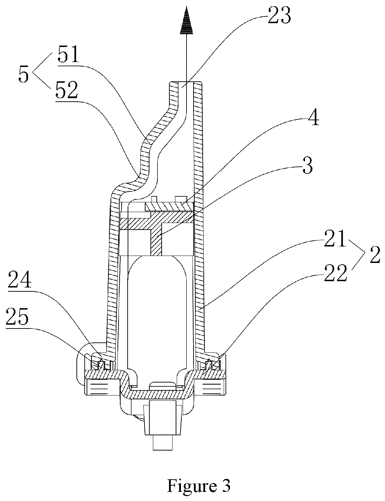

As shown in Figure 3, the humidifying assembly 1 generates water mist through an ultrasonic oscillation plate, and the water mist is blown into the mist guiding assembly by a fan. After entering the mist guiding tube 2, the water mist flows towards the mist outlet 23 above the mist guiding tube 2. It first passes through the mist-guiding inclined surfaces 32 of the mist outlet grid 3, which slows down the speed of the water mist and guides it. Then it passes through the mist-guiding curved surface 5 of the upper cover 21, where the convex surface 51 and the concave surface 52 further slow down the speed of the water mist before flowing out from the mist outlet 23, thus solving the problems of the flame effect being skewed, uneven in size, uneven in front and back, and severely distorted.

A limited slot 24 is provided on the upper cover 21, and a convex edge 25 matching the limited slot 24 is provided on the lower cover 22 for engagement with the limited slot 24.

One end of the mist guiding tube 2 connected to the humidifying assembly 1 is provided with a silicone sealing ring 6 to prevent water leakage. In addition, one end of the mist guiding tube 2 connected to the humidifying assembly 1 can also be integrally welded.

The upper cover 21 and the lower cover 22 are welded together by ultrasonic welding to prevent water and mist leakage.

The lighting assembly 4 is an LED light board.

The above description is only exemplary embodiment of the present application and should not be construed as limiting the present application. Any modifications, equivalent replacements, improvements, etc., made within the spirit and principles of the present application shall be included within the scope of protection of the present application.

## Claims

1. A simulated flame humidifier, comprises a humidifying assembly (1) for generating mist and a mist guiding assembly for guiding the mist, one end of the mist guiding assembly is connected to the humidifying assembly (1), wherein the mist guiding assembly comprises a mist guiding tube (2), a mist outlet grid (3), and a lighting assembly (4); the lighting assembly (4) and the mist outlet grid (3) are both disposed in the mist guiding tube (2); the lighting assembly (4) is disposed above the mist outlet grid (3); the mist outlet grid (3) comprises a fixing plate (31) and a plurality of mist-guiding inclined surfaces (32), the mist-guiding inclined surfaces (32) being successively arranged along the length direction of the fixing plate (31).

2. The simulated flame humidifier according to claim 1, wherein the mist guiding tube (2) comprises an upper cover (21) and a lower cover (22), the upper cover (21) is arranged on the lower cover (22) to form a mist-guiding channel, and the upper cover (21) is provided with a mist outlet (23), the mist outlet (23) is arranged opposite to the lighting assembly (4).

3. The simulated flame humidifier according to claim 2, wherein the upper cover (21) is provided with a mist-guiding curved surface (5), the mist outlet grid (3) is provided below the mist-guiding curved surface (5); the mist-guiding curved surface (5) comprises a convex surface (51) being convex towards an outer side of the mist guiding tube (2) and a concave surface (52) being concave towards an inner side of the mist guiding tube (2).

4. The simulated flame humidifier according to claim 3, wherein a limited slot (24) is provided on the upper cover (21), and a convex edge (25) matching the limited slot (24) is provided on the lower cover (22), the convex edge (25) is engaged with the limited slot (24).

5. The simulated flame humidifier according to claim 4, wherein one end of the mist guiding tube (2) connected to the humidifying assembly (1) is provided with a silicone sealing ring (6) for preventing water leakage.

6. The simulated flame humidifier according to claim 5, wherein the upper cover (21) and the lower cover (22) are integrally welded by ultrasonic welding.

7. The simulated flame humidifier according to claim 6, wherein the lighting assembly (4) is an LED light board.
